# EUROPÄISCHE PATENTANMELDUNG

(11) **EP 4 113 954 A1**
(43) Veröffentlichungstag der Anmeldung: **04.01.2023**
(21) Anmeldenummer: 21182916.3
(22) Anmeldetag: 30.06.2021
(51) Int. Cl.: H04L 67/00

(54) **COMPUTER-IMPLEMENTIERTES VERFAHREN ZUM BETRIEB EINES END-GERÄTS MIT HOHER VERFÜGBARKEIT IN EINEM NETZWERK**

(71) Anmelder: Siemens Aktiengesellschaft, 80333 München (DE)
(72) Erfinder: Schall, Daniel, 2020 Hollabrunn (AT)
(74) Vertreter: Maier, Daniel Oliver

(57) **Zusammenfassung**

Computer-implementiertes Verfahren zum Betrieb eines End-Geräts mit hoher Verfügbarkeit in einem Netzwerk, umfassend ein erstes Edge-Gerät (A), welches das End-Gerät (IOT) betreibt, zumindest ein zweites Edge-Gerät (B) und eine Überwachungs-Vorrichtung (MD) mit einem Speicher (MS) in der Cloud, wobei im Speicher (MS) zumindest eine Kennung für ein Ausfallersatz-Gerät des ersten Edge-Geräts (A), welche sich auf das zumindest eine zweite Edge-Gerät (B) bezieht, sowie eine Information bezüglich der Verbindungs-Konfiguration (CC) zwischen dem ersten und dem zumindest einen zweiten Edge-Gerät (A, B), der Überwachungs-Vorrichtung (MD) und dem End-Gerät (IOT), gespeichert ist, und das erste Edge-Gerät (A) periodisch ein Signal (HB) über dessen korrekten Betrieb im Netzwerk versendet, und das Signal (HB) von der Überwachungs-Vorrichtung (MD) empfangen wird, und bei Erkennung eines fehlenden oder fehlerhaften Signals (HB) ein zugeordnetes Fehler-Gerät erkannt wird, und das Modell (AIM) und die Verbindungs-Konfiguration (CC) des Fehler-Geräts an ein Ersatz-Gerät übermittelt wird, wobei das Ersatz-Gerät (BD) durch die Kennung bestimmt ist, welche dem fehlenden oder fehlerhaften Signal (HB) zugeordnet ist, und das Ersatz-Gerät das End-Gerät (IOT) mithilfe des empfangenen Modells (AIM) und der Verbindungs-Konfiguration (CC) betreibt.

## Beschreibung

Die Erfindung betrifft ein computer-implementiertes Verfahren zum Betrieb eines End-Geräts mit hoher Verfügbarkeit in einem Netzwerk, umfassend ein erstes Edge-Gerät, welches das End-Gerät betreibt, zumindest ein zweites Edge-Gerät, und eine Überwachungs-Vorrichtung mit einem Speicher in der Cloud.

Die Erfindung betrifft ferner ein entsprechendes Computerprogramm, einen elektronisch lesbaren Datenträger, ein Datenträgersignal, und ein System zum Betrieb eines End-Geräts mit hoher Verfügbarkeit in einem Netzwerk.

Edge Computing ist ein wichtiger Ansatz, um fortschrittliche Verarbeitungsfunktionen in die Fabrik zu bringen. Die Datenverarbeitung reicht von der einfachen Aggregation von Datenpunkten bis hin zu fortgeschrittenen Methoden der künstlichen Intelligenz (KI), um komplexes Maschinenverhalten zu analysieren oder ein Produktionssystem zu optimieren.

Es gibt verschiedene Konzepte für hochverfügbare Systeme im Cloud- und Fog-Computing-Kontext sowie für Steuerungssysteme.

Derzeitige Edge-Systeme haben meist das Problem, dass sie bei einem unerwünschten Abbruch durch ein Edge-Gerät ebenso abbrechen. Es sind keine "Failover"-Mechanismen auf einer Edge bekannt, welche auf derartige Abbrüche reagieren.

Hinsichtlich Edge-Computing and speziell zur Erhaltung der Verfügbarkeit von KI-Modellen (künstliche Intelligenz, KI) sind derzeit keine Mechanismen bekannt, welche auf automatisch auf Fehler reagieren.

Daher ist es Aufgabe der Erfindung, eine Systemarchitektur bereitzustellen, welche auf Störungen und Fehler auf einer Edge reagiert und somit einen unterbrechungsfreier Betrieb erlaubt.

Die erfindungsgemäße Aufgabe wird durch ein Verfahren eingangs genannter Art gelöst, bei welchem im Speicher zumindest eine Kennung für ein Ausfallersatz-Gerät des ersten Edge-Geräts, welche sich auf das zumindest eine zweite Edge-Gerät bezieht, sowie eine Information bezüglich der Verbindungs-Konfiguration zwischen dem ersten und dem zumindest einen zweiten Edge-Gerät, der Überwachungs-Vorrichtung und dem End-Gerät gespeichert ist, und das erste Edge-Gerät periodisch ein Signal über dessen korrekten Betrieb im Netzwerk versendet, und das Signal von der Überwachungs-Vorrichtung empfangen wird, und bei Erkennung eines fehlenden oder fehlerhaften Signals ein zugeordnetes Fehler-Gerät erkannt wird, und das Modell und die Verbindungs-Konfiguration des Fehler-Geräts an ein Ersatz-Gerät übermittelt wird, wobei das Ersatz-Gerät durch die Kennung bestimmt ist, welche dem fehlenden oder fehlerhaften Signal zugeordnet ist, und das Ersatz-Gerät das End-Gerät mithilfe des empfangenen Modells und der Verbindungs-Konfiguration betreibt.

Dadurch wird erreicht, dass die Verfügbarkeit des End-Geräts gesteigert wird, indem ein weiteres Gerät im Netzwerk den Betrieb übernimmt.

Eine Störung eines Edge-Geräts wird erkannt, indem ein Betriebs-Zustandssignal, auch "heartbeat" oder "watchdog"-Signal eingesetzt wird.

Ein ungestörtes Edge-Gerät kann durch ein korrekt empfangenes Signal erkannt werden. Der regelmäßige Empfang dieses Signals ist somit ein Indikator dafür, dass das jeweilige Edge-Gerät korrekt arbeitet und ein zugeordnetes IoT-End-Gerät betreibt, d.h. beispielsweise Betriebsparameter erfasst oder empfängt, daraus eine Prädiktion über den Betrieb des End-geräts durchführt oder auch Steuersignal an das Endgerät sendet.

Die Erfindung sieht vor, dass auf eine einfache Weise ein Ersatz-Edge-Gerät ermittelt wird und dass dieses Ersatz-Edge-Gerät den Betrieb des defekten Geräts übernimmt.

Dabei ist es vorteilhaft, dass keine zusätzliche Hardware benötigt wird, um die Systemkomplexität und die Kosten gering zu halten.

Ferner ist es günstig, dass die erfindungsgemäße Architektur zur Selbst-Konfiguration beziehungsweise zur Selbst-Wiederherstellung befähigt ist, damit keine aufwändige Inbetriebnahme beispielsweise durch IT-Spezialisten erforderlich ist.

Außerdem ist es vorteilhaft, dass kein komplexes und kompliziertes Cluster-Management erforderlich ist, wie beispielsweise bei einem Kubernetes-Cluster, und die erfindungsgemäße Lösung auf einer bereits bestehenden Edge-Infrastruktur, beispielsweise als Software-Erweiterung lauffähig ist.

In einer Weiterbildung der Erfindung ist es vorgesehen, dass ferner für das zumindest eine zweite Edge-Gerät zumindest eine Kennung für ein Ausfallersatz-Gerät für das zumindest eine zweite Edge-Gerät im Speicher gespeichert ist, und ferner das zumindest eine zweite Edge-Gerät periodisch ein Signal über den korrekten Betrieb des jeweiligen Geräts im Netzwerk versendet.

Dadurch wird für mehrere Edge-Geräte eine Verfügbarkeits-Steigerung im gemeinsamen Betrieb erreicht.

In einer Weiterbildung der Erfindung ist es vorgesehen, dass zumindest zwei zweite Edge-Geräte vorgesehen sind, und für das erste und die zumindest zwei zweiten Edge-Geräte jeweils zumindest zwei Kennungen für ein Ausfallersatz-Gerät im Speicher gespeichert sind, und die Kennungen gereiht sind, und das Ausfallersatz-Gerät gemäß der Reihung aus den Kennungen ausgewählt wird.

Dadurch wird erreicht, dass eine vorbestimmte Abfolge an Ausfall-Geräten bereitgestellt wird, wodurch mehrere Ausfälle von Edge-Geräten wahrgenommen und gelöst werden können.

In einer Weiterbildung der Erfindung ist es vorgesehen, dass die zumindest zwei Kennungen für Ausfallersatz-Geräte eine Sortierung aufweisen, welche die Rechenkapazität oder Speicherkapazität des gemäß der Verbindungs-Konfiguration zugeordneten End-Geräts berücksichtigen.

Dadurch wird erreicht, dass eine Leistung für ein Ausfall-Gerät vordefiniert wird, wodurch das Ersatz-Gerät einen möglichst gleichwertigen Ersatz für das Fehler-Gerät bildet.

Ferner kann dadurch zusätzlich zur eigenen benötigten Leistung eine Ausfallleistung angegeben werden, um den gemeinsamen Betrieb mit dem eigenen End-Gerät sowie Ersatz-Gerät sicherzustellen.

Im Zusammenhang mit der vorliegenden Erfindung wird mit einer Sortierung eine Priorisierung einer Abfolge von Ausfallgeräten bezeichnet. Mit anderen Worten wird bei einem Edge-Geräte-Ausfall die Sortierung in ansteigender Reihenfolge durchsucht, bis ein geeignetes verfügbares Edge-Gerät aus der Prioritäten-Liste abgerufen werden kann.

In einer Weiterbildung der Erfindung ist es vorgesehen, dass die zumindest zwei Kennungen für Ausfallersatz-Geräte eine Sortierung aufweisen, welche die geographische Nähe des gemäß der Verbindungs-Konfiguration zugeordneten End-Geräts berücksichtigen.

Dadurch wird erreicht, dass eine Leistung, insbesondere Anforderungen an die Latenz, für ein Ausfall-Gerät vordefiniert wird, wodurch das Erdsatz-Gerät einen möglichst gleichwertigen Ersatz für das Fehler-Gerät bildet.

In einer Weiterbildung der Erfindung ist es vorgesehen, dass die zumindest zwei Kennungen für Ausfallersatz-Geräte eine Sortierung aufweisen, welche zumindest einen Verfügbarkeits-Parameter des gemäß der Verbindungs-Konfiguration zugeordneten End-Geräts berücksichtigen.

Dadurch wird erreicht, dass eine Leistung, insbesondere Anforderungen an die Übertragungsrate, für ein Ausfall-Gerät vordefiniert wird, wodurch das Ersatz-Gerät einen möglichst gleichwertigen Ersatz für das Fehler-Gerät bildet.

In einer Weiterbildung der Erfindung ist es vorgesehen, dass die zumindest zwei Kennungen für Ausfallersatz-Geräte eine Sortierung aufweisen, welche zumindest einen Verfügbarkeits-Parameter des gemäß der Verbindungs-Konfiguration (CC) zugeordneten End-Geräts berücksichtigen.

Dadurch wird erreicht, dass eine Leistung, insbesondere Anforderungen an die Verfügbarkeit, für ein Ausfall-Gerät vordefiniert wird, wodurch das Erdsatz-Gerät einen möglichst gleichwertigen Ersatz für das Fehler-Gerät bildet.

Ferner kann dadurch zusätzlich zur eigenen benötigten Verfügbarkeit eine Ausfallleistung angegeben werden, um den gemeinsamen Betrieb mit dem eigenen End-Gerät sowie Ersatz-Gerät sicherzustellen.

In einer Weiterbildung der Erfindung ist es vorgesehen, dass zumindest zwei unabhängige Kommunikationspfade im Netzwerk zwischen dem ersten Edge-Gerät, dem zumindest einen zweiten Edge-Gerät, dem End-Gerät und der Überwachungs-Vorrichtung vorgesehen sind.

Dadurch wird die Verfügbarkeit des Systems weiter erhöht.

Die erfindungsgemäße Aufgabe wird auch durch ein Computerprogramm gelöst, umfassend Befehle, welche bei deren Ausführung durch einen Computer diesen veranlassen, das erfindungsgemäße Verfahren auszuführen.

Die erfindungsgemäße Aufgabe wird auch durch einen elektronisch lesbaren Datenträger mit darauf gespeicherten lesbaren Steuerinformationen gelöst, welche zumindest das erfindungsgemäße Computerprogramm umfassen und derart ausgestaltet sind, dass sie bei Verwendung des Datenträgers in einer Recheneinrichtung das erfindungsgemäße Verfahren durchführen.

Die erfindungsgemäße Aufgabe wird auch durch ein Datenträgersignal gelöst, welches das erfindungsgemäße Computerprogramm überträgt.

Die erfindungsgemäße Aufgabe wird auch durch ein System zum Betrieb eines End-Geräts mit hoher Verfügbarkeit in einem Netzwerk gelöst, umfassend ein erstes Edge-Gerät, welches ein End-Gerät betreibt, zumindest ein zweites Edge-Gerät, und eine Überwachungs-Vorrichtung mit einem Speicher in der Cloud wobei das System dazu eingerichtet ist, das erfindungsgemäße Verfahren auszuführen.

Die Erfindung wird nachfolgend anhand eines in den beigeschlossenen Zeichnungen dargestellten Ausführungsbeispiels näher erläutert. In den Zeichnungen zeigt:
- Fig. 1: ein Blockschaltbild mit einem Beispiel für ein Industrial Edge-System,
- Fig. 2: ein Beispiel für miteinander verbundenen Edge-Geräten in einer P2P-Edge-Kommunikations-Topologie,
- Fig. 3: ein P2P-Publish-Subscribe-Muster via MQTT für das Beispiel nach Fig. 2,
- Fig. 4: das Bespiel nach Fig. 2 mit einem ausgefallenen Edge-Gerät,
- Fig. 5-6: Beispiele für ein Backup-Peers Verfahren mit Prioritäten über Peers,
- Fig. 7: ein Flussdiagramm in einer Systemarchitektur zur Wiederherstellung von KI-Modellen nach einem Fehler,
- Fig. 8: ein Flussdiagramm zur Wiederherstellung von KI-Modellen nach einem Fehler.

In den folgenden Abbildungen sind nur wichtige Elemente des erfindungsgemäßen Systems dargestellt. Es ist klar, dass weitere Komponenten zum Betrieb des Systems notwendig sind. Aus Gründen der Übersichtlichkeit wurde aber auf deren Darstellung verzichtet.

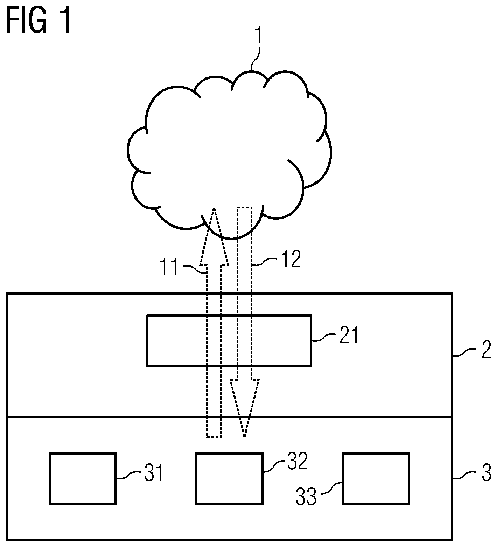

**Fig. 1** gibt einen Überblick über das Siemens Industrial Edge-System, bei welchem Daten 11 von Gerät zu einer Cloud 1 übertragen werden, sowie auch umgekehrt Daten 12 von Cloud zu einem Gerät.

Ein in einer Fabrik-Ebene 2 gelegene Edge-Gerät 21 kann dabei bestimmte Apps hosten. Eine App kann auch ein KI-Modell mit Glue-Code zur Integration in das Produktionssystem sein.

Die Geräte 31-33 liegt in einer Feld-/ Geräte-Ebene 3.

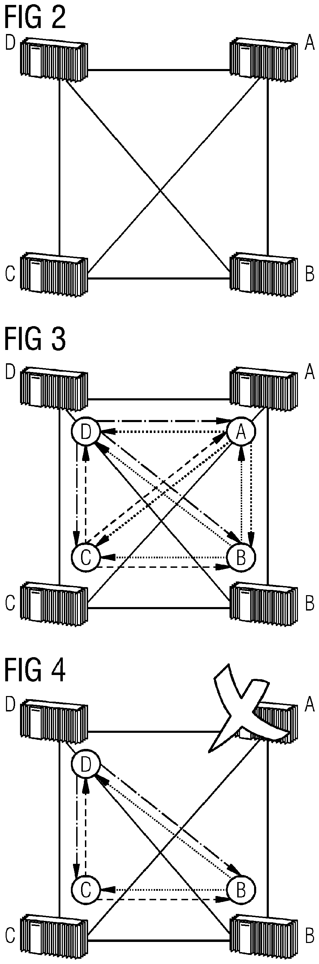

**Fig. 2** zeigt eine P2P-Edge-Kommunikations-Topologie mit Peers mit einer Menge an Edge-vorrichtungen A-D, welche untereinander über ein Standard-TCP/IP-Netzwerk kommunizieren können.

Die Edge-Vorrichtungen A-D können sich untereinander und gegenseitig mithilfe bekannter Netzwerkmechanismen erkennen.

**Fig. 3** zeigt ein Bespiel für ein P2P-Publish-Subscribe-Muster durch ein MQTT-Protokoll von Edge-Geräten A-D.

Das "Message Queuing Telemetry Transport" (MQTT) ist ein offenes Netzwerkprotokoll für Machine-to-Machine-Kommunikation, welches die Übertragung von Telemetriedaten in Form von Nachrichten zwischen Geräten ermöglicht, trotz hoher Verzögerungen oder beschränkter Netzwerke.

Ein Teilnehmer abonniert Themen eines anderen Teilnehmers. Dieser Zusammenhang ist in der Kommunikations-Matrix eingetragen.

Ein Beispiel für abonnierte Teilnehmer für publish-subscribe-Verfahren ist in Tabelle 1 dargestellt.

Im bezeigten Beispiel ist in der Spalte für das Gerät A erkennbar, dass das Gerät A Nachrichten zu Änderungen bei den Geräten B, C, D abonniert hat, wodurch jeder Teilnehmer über den "Gesundheitszustand" aller anderen Geräte Bescheid weiß.

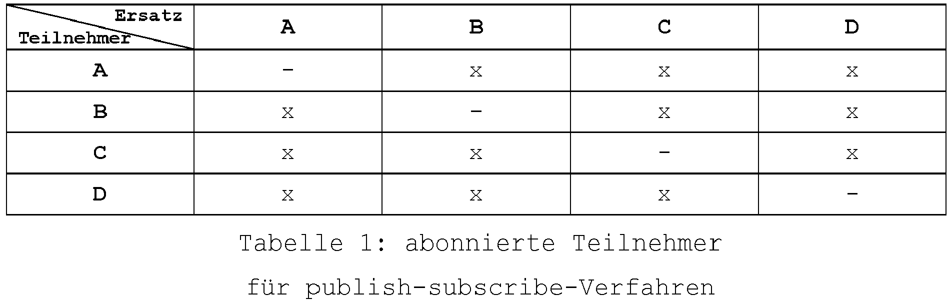

**Fig. 4** zeigt ein Beispiel für eine automatische Fehlererkennung. Teilnehmer A ist in diesem Beispiel gegenüber Fig. 3 ausgefallen.

Es wird ein "heart beat"-Mechanismus HB zwischen den Edge-Geräten A-D verwendet, welche die Menge der Edge-Geräte ED definiert, wobei periodisch eine Anfrage unter Benachrichtigung des aktuellen "Lebens"-Status des sendenden Geräts an alle anderen teilnehmenden Geräte gesendet wird.

Falls kein heart-beat-Signal HB innerhalb eines vordefinierten Zeitintervalls empfangen wird, wird daraus abgeleitet, dass das Gerät nicht mehr funktioniert und eine Backup-Gerät muss ausgewählt werden, um die Funktion des nichtfunktionierenden Geräts zu übernehmen.

Tabelle 2 zeigt den Ausfall des Teilnehmers A.

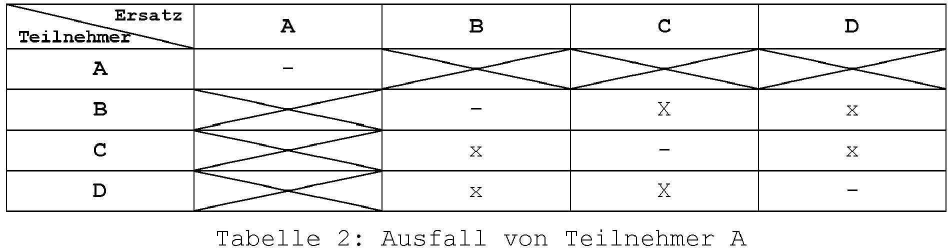

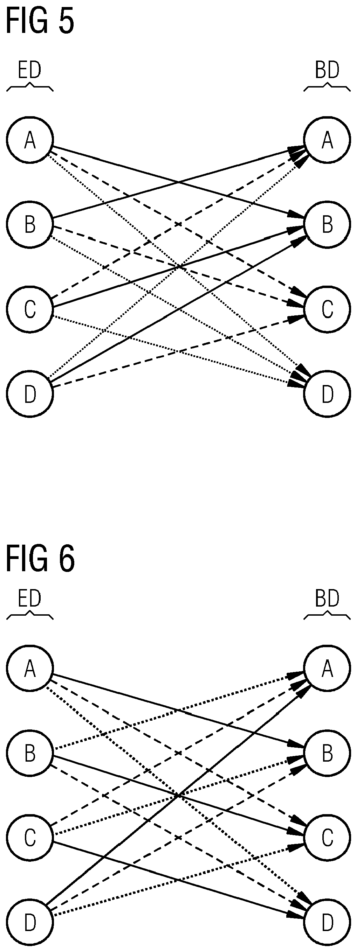

**Fig. 5** ein Beispiel für ein Backup-Peers Verfahren mit Prioritäten, wobei die Verteilung der Prioritäten über Peers zufällig ist.

Im dargestellten Graph sind die Backup-Peers, d.h. die Ersatz-Egde-Geräte gezeigt, wobei die Strichstärke der Pfeile eine Priorisierung angeben soll.

In der Figur ist die Priorität 1 durch durchgezogene Pfeile dargestellt, die Priorität 2 durch strichliert gezogene Pfeile und die Priorität 3 durch punktiert gezogene Pfeile.

Diese Darstellung kann auch tabellarisch erfolgen, siehe Tabelle 3.

Jedes Gerät A-E eine Tabelle mit Prioritäten.

In der Tabelle 3, erste Zeile, ist erkennbar, dass das Gerät A das Backup mit der Priorität 1 für das Gerät B, sowie das Backup mit der Priorität 2 für das Gerät D und das Backup mit der Priorität 3 für das Gerät C ist.

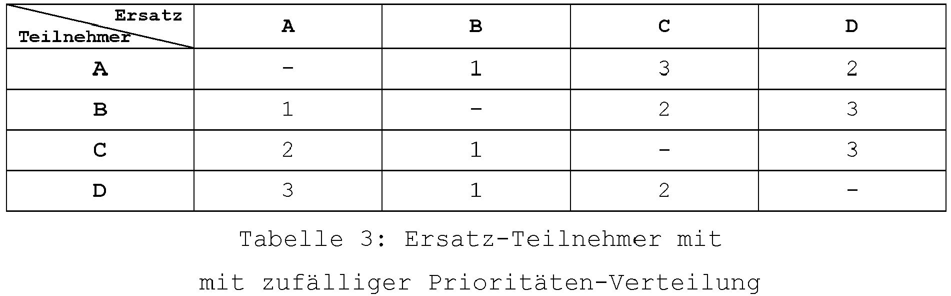

**Fig. 6** ein Beispiel für ein Backup-Peers Verfahren mit Prioritäten, wobei die Verteilung der Prioritäten über Peers homogen ist.

In der Figur ist die Priorität 1 durch durchgezogene Pfeile dargestellt, die Priorität 2 durch strichliert gezogene Pfeile und die Priorität 3 durch punktiert gezogene Pfeile.

Eine tabellarische Darstellung der Fig. 5 ist in Tabelle 4 angegeben.

Die Prioritäten werden zeilenweise ansteigend vergeben.

Die kann günstig sein, wenn beispielsweise die Geräte A-D nach geographischer Nähe oder nach ähnlichen Geräteeigenschaften, wie Rechenkapazität oder Speicherkapazität, in der Tabelle sortiert sind und durch die homogene Verteilung das "nächstgelegene" Gerät als Backup-Gerät gewählt werden soll.

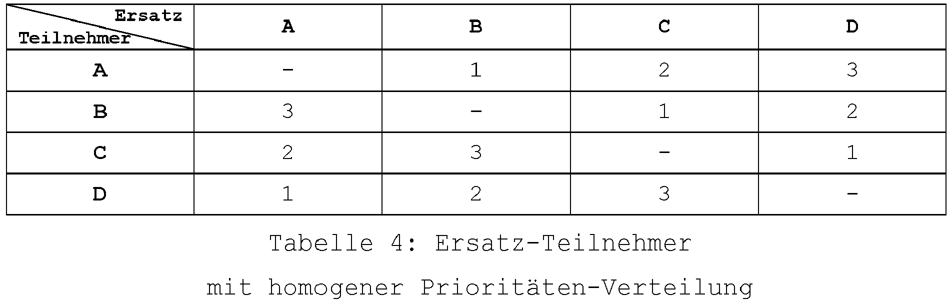

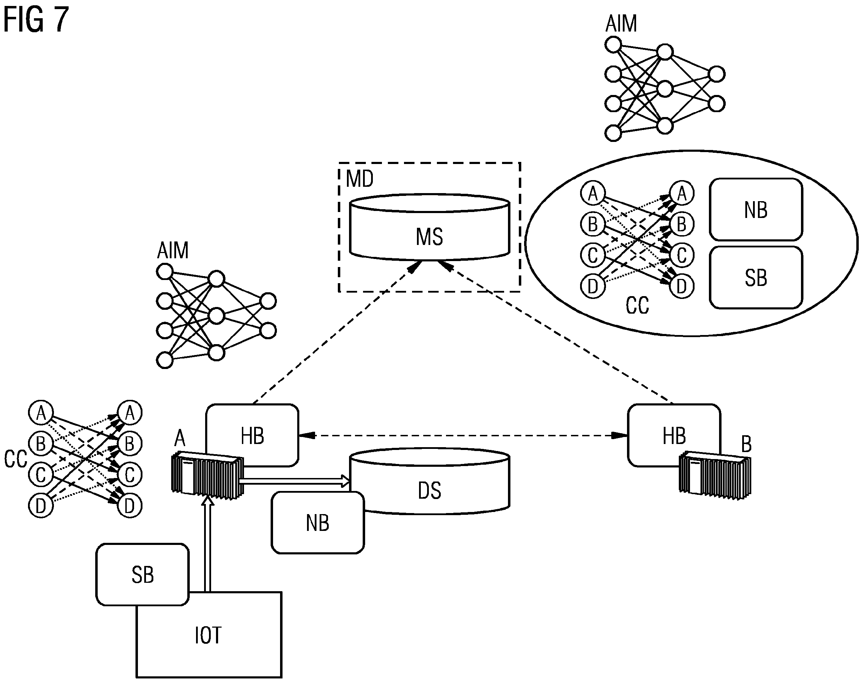

**Fig. 7** zeigt ein Flussdiagramm in einer Systemarchitektur, bei welcher ein KI-Modell AIM von einer Anwendung auf dem Gerät A betrieben wird.

Von einem verbundenen End-Gerät IOT, beispielsweise einer Maschine, werden aktuelle Daten erfasst und über den "südlichen" Kommunikationspfad SB an das Gerät A übertragen.

Die Daten werden mithilfe des KI-Modells AIM verarbeitet und über den "nördlichen" Kommunikationspfad NB zusammen mit Informationen zur Verbindung-Konfigurationen CC zu einer Cloud beziehungsweise einem lokalen Datenspeicher DS übertragen.

Das Edge-Gerät A sendet (periodisch wiederkehrend) zusätzlich ein "heartbeat"-Signal HB zu anderen Peers, also den Geräten B-D in diesem Beispiel, sowie zusätzlich an eine Überwachungs-Vorrichtung MD (engl. "monitoring device") mit einem Modell-Speicher MS.

Der Modell-Speicher MS speichert Artefakte zur Bereitstellung von KI-Modellen und die relevanten Konfigurationen der Verbindungen CC (engl. "communication configuration") von und zwischen dem "südlichen" Kommunikationspfad SB und dem "nördlichen" Kommunikationspfad NB.

Überwachungs-Vorrichtung MD weist eine Rechenvorrichtung auf, um verschiedene Backup-Peers-Verfahrensschritte auszuführen, wie die Überwachung des "heartbeat"-Signals HB oder die Bereitstellung oder Verschlüsselung von Daten aus dem Speicher MS.

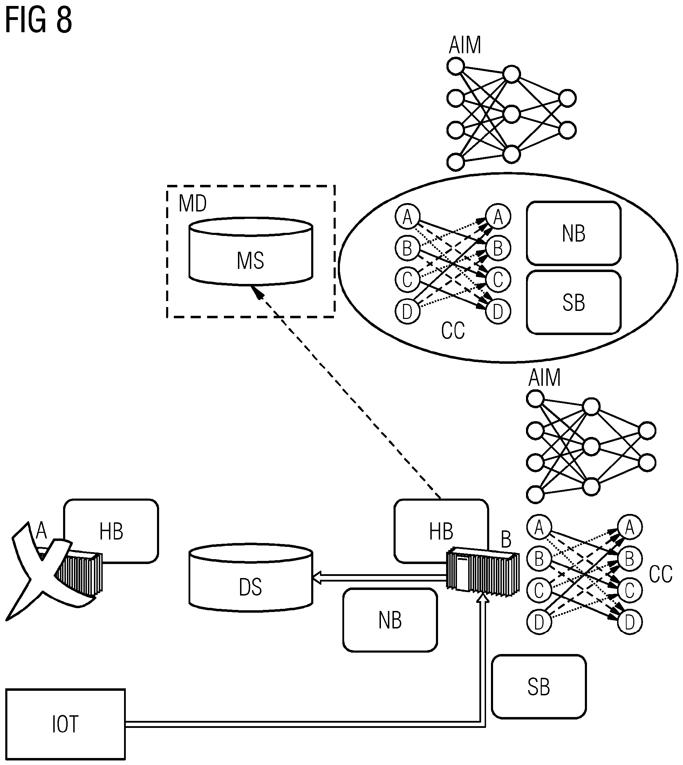

**Fig. 8** zeigt ein Flussdiagramm in der Systemarchitektur nach Fig. 7 zur Wiederherstellung des KI-Modells AIM nach einem Fehler im Edge-Gerät A.

Bei einem Fehler im Edge-Gerät A sendet Gerät A kein "heart-beat"-Signal HB, weder an die anderen Geräte B-D, noch an die Überwachungs-Vorrichtung MD.

Dies wird von der Überwachungs-Vorrichtung MD erkannt. Dann wird es dem Gerät B gestattet, das jeweilige Modell AIM und die dazugehörige Verbindungs-Konfiguration CC vom Modell-Speicher MS abzurufen.

Die Überwachungs-Vorrichtung MD verschlüsselt nun die Artefakte mit dem öffentlichen Schlüssel des Geräts B und dem privaten Schlüssel der Überwachungs-Vorrichtung MD.

Die Überwachungs-Vorrichtung MD sendet anschließend eine Verknüpfung mit einem Verweis auf den verschlüsselten Datensatz an das Gerät B.

Das Gerät B empfängt die Verknüpfung, lädt die entsprechenden Artefakt-Daten aus dem Modell-Speicher MS der Überwachungs-Vorrichtung MD und entschlüsselt diese mit dem privaten Schlüssel des Geräts B und dem öffentlichen Schlüssel des Modell-Speichers MS.

Dann lädt das Gerät B die Verbindungs-Konfiguration CC, bildet aus den entschlüsselten Artefakt-Daten das KI-Modell AIM und wendet das KI-Modell AIM für die Maschine IOT anstelle des ausgefallenen Geräts A an.

Die Übermittlung des Modells AIM und der Konfiguration CC kann auch auf andere Weisen erfolgen.

Zusammengefasst wurde der gesamte Daten- und KI-Fluss ohne manuelle Eingriffe auf einfache Weise und rasch wiederhergestellt.

Vorhersagelücken können sogar umgangen werden, indem die Daten beispielsweise auf einer Steuerung der Maschine IOT gepuffert werden, und die gepufferten Daten übertragen werden, sobald das Backup-Edge-Gerät wieder verfügbar ist und das KI-Modell AIM geladen ist.

### Bezugszeichenliste:

- 1: Cloud-Ebene
- 11: Daten Gerät-zu-Cloud
- 12: Daten Cloud-zu-Gerät
- 2: Fabrik-Ebene
- 3: Feld-/ Geräte-Ebene
- A-D, 21, ED: Edge-Gerät mit Edge Anwendung (zu Cloud und Gerät)
- AIM: KI-Modell
- BD: Ersatz-Gerät
- CC: Verbindungs-Konfiguration, engl. "communication configuration"
- DS: Daten-Speicher
- HB: "heart beat"
- IOT, 31-33: End-Gerät, Maschine
- MD: Überwachungs-Vorrichtung, engl. "monitoring device"
- MS: Modell-Speicher
- NB: "nördlicher"/ "north bound" Kommunikationspfad
- SB: "südlicher"/ "south bound" Kommunikationspfad

## Patentansprüche

1. Computer-implementiertes Verfahren zum Betrieb eines End-Geräts mit hoher Verfügbarkeit in einem Netzwerk, umfassend ein erstes Edge-Gerät (A, 21), welches das End-Gerät (IOT, 31-33) betreibt, zumindest ein zweites Edge-Gerät (B-D) und eine Überwachungs-Vorrichtung (MD) mit einem Speicher (MS) in der Cloud (1),
**dadurch gekennzeichnet, dass** im Speicher (MS) zumindest eine Kennung für ein Ausfallersatz-Gerät des ersten Edge-Geräts (A, 21), welche sich auf das zumindest eine zweite Edge-Gerät (B-D) bezieht, sowie eine Information bezüglich der Verbindungs-Konfiguration (CC) zwischen dem ersten und dem zumindest einen zweiten Edge-Gerät (A-D), der Überwachungs-Vorrichtung (MD) und dem End-Gerät (IOT, 31-33), gespeichert ist,
und das erste Edge-Gerät (A, 21) periodisch ein Signal (HB) über dessen korrekten Betrieb im Netzwerk versendet,
und das Signal (HB) von der Überwachungs-Vorrichtung (MD) empfangen wird, und bei Erkennung eines fehlenden oder fehlerhaften Signals (HB) ein zugeordnetes Fehler-Gerät erkannt wird, und das Modell (AIM) und die Verbindungs-Konfiguration (CC) des Fehler-Geräts an ein Ersatz-Gerät (BD) übermittelt wird,
wobei das Ersatz-Gerät (BD) durch die Kennung bestimmt ist, welche dem fehlenden oder fehlerhaften Signal (HB) zugeordnet ist,
und das Ersatz-Gerät (BD) das End-Gerät (IOT, 31-33) mithilfe des empfangenen Modells (AIM) und der Verbindungs-Konfiguration (CC) betreibt.

2. Verfahren nach dem vorhergehenden Anspruch, wobei ferner für das zumindest eine zweite Edge-Gerät (B-D) zumindest eine Kennung für ein Ausfallersatz-Gerät für das zumindest eine zweite Edge-Gerät (B-D) im Speicher (MS) gespeichert ist, und ferner das zumindest eine zweite Edge-Gerät (B-D) periodisch ein Signal (HB2) über den korrekten Betrieb des jeweiligen Geräts im Netzwerk versendet.

3. Verfahren nach dem vorhergehenden Anspruch, wobei zumindest zwei zweite Edge-Geräte (A-D) vorgesehen sind, und für das erste und die zumindest zwei zweiten Edge-Geräte (A-D, 21) jeweils zumindest zwei Kennungen für ein Ausfallersatz-Gerät im Speicher (MS) gespeichert sind, und die Kennungen gereiht sind, und das Ausfallersatz-Gerät gemäß der Reihung aus den Kennungen ausgewählt wird.

4. Verfahren nach Anspruch 3, wobei die zumindest zwei Kennungen für Ausfallersatz-Geräte eine Sortierung aufweisen, welche die Rechenkapazität oder Speicherkapazität des gemäß der Verbindungs-Konfiguration (CC) zugeordneten End-Geräts (IOT, 31-33) berücksichtigen.

5. Verfahren nach Anspruch 3, wobei die zumindest zwei Kennungen für Ausfallersatz-Geräte eine Sortierung aufweisen, welche die geographische Nähe des gemäß der Verbindungs-Konfiguration (CC) zugeordneten End-Geräts (IOT, 31-33) berücksichtigen.

6. Verfahren nach Anspruch 3, wobei die zumindest zwei Kennungen für Ausfallersatz-Geräte eine Sortierung aufweisen, welche zumindest einen Verfügbarkeits-Parameter des gemäß der Verbindungs-Konfiguration (CC) zugeordneten End-Geräts (IOT, 31-33) berücksichtigen.

7. Verfahren nach Anspruch 3, wobei die zumindest zwei Kennungen für Ausfallersatz-Geräte eine Sortierung aufweisen, welche zumindest einen Verfügbarkeits-Parameter des gemäß der Verbindungs-Konfiguration (CC) zugeordneten End-Geräts (IOT, 31-33) berücksichtigen.

8. Verfahren nach einem der vorhergehenden Ansprüche, wobei zumindest zwei unabhängige Kommunikationspfade im Netzwerk zwischen dem ersten Edge-Gerät (A, 21), dem zumindest einen zweiten Edge-Gerät (B-D), dem End-Gerät (IOT, 31-33), und der Überwachungs-Vorrichtung (MD) vorgesehen sind.

9. Computerprogramm, umfassend Befehle, welche bei deren Ausführung durch einen Computer diesen veranlassen, das Verfahren nach einem der vorhergehenden Ansprüche auszuführen.

10. Elektronisch lesbarer Datenträger mit darauf gespeicherten lesbaren Steuerinformationen, welche zumindest das Computerprogramm nach dem vorhergehenden Anspruch umfassen und derart ausgestaltet sind, dass sie bei Verwendung des Datenträgers in einer Recheneinrichtung das Verfahren das Verfahren nach einem der Ansprüche 1 bis 8 durchführen.

11. Datenträgersignal, welches das Computerprogramm nach Anspruch 9 überträgt.

12. System zum Betrieb eines End-Geräts mit hoher Verfügbarkeit in einem Netzwerk, umfassend ein erstes Edge-Gerät (A, 21), welches das End-Gerät (IOT, 31-33) betreibt, zumindest ein zweites Edge-Gerät (B-D), und eine Überwachungs-Vorrichtung (MD) mit einem Speicher (MS) in der Cloud (1), **dadurch gekennzeichnet, dass** das System dazu eingerichtet ist, das Verfahren nach einem der vorhergehenden Ansprüche auszuführen.
